# EUROPEAN PATENT APPLICATION

(11) **EP 4 372 357 A1**
(43) Date of publication of application: **22.05.2024**
(21) Application number: 23211306.8
(22) Date of filing: 21.11.2023
(51) Int. Cl.: G01N 1/31, G01N 1/36, G01N 35/00, G09F 3/00, G09F 3/10, G09F 3/02

(54) **EMBEDDED-TISSUE LABEL WITH METAL DETECTION CAPABILITY**

(30) Priority: 21.11.2022 US 202263384470 P
(71) Applicant: 13652611 Canada Inc., Laval QC H7W 0B6 (CA)
(72) Inventor: AMBARTSOUMIAN, Gourgen, LAVAL, H7W 0B6 (CA)
(74) Representative: Regimbeau

(57) **Abstract**

A label may have a facestock or opaque film layer. A metallic layer is under the facestock or opaque film layer, the metallic layer configured to be detected by metal detector. An adhesive layer is on an opposite side of the metallic layer from the facestock or opaque film layer. The adhesive layer is configured to be adhesively secured to an embedding agent of a block in which a tissue sample is embedded.

## Description

### CROSS-REFERENCE TO RELATED APPLICATION

The present application claims the priority of United States Patent Application No. 63/384,470, filed on November 21, 2022 and incorporated herein by reference in its entirety.

### TECHNICAL FIELD

The present application relates to labels associated to tissue processing and embedding cassettes used in histology, histopathology, pathology, cytology and related fields.

### BACKGROUND

Tissue processing and tissue embedding are processes regularly used in histology, pathology, cytology and histopathology labs or other labs for tissue sample fixation and processing for microscopy. In a typical procedure, excised tissue is placed in a tissue embedding cassette for processing, starting with fixation. Fixation is used to preserve tissues and is usually carried out immediately or rapidly after the removal of the tissue to avoid tissue degradation. After the dehydrated tissue sample is fixed/processed, it needs to be infiltrated with an embedding agent, such as paraffin wax, paraplast, etc. The embedding agents are available in different hardnesses depending on the plasticizers in the formulation. Tissue samples are then placed into an embedding mold of appropriate size and a molten embedding agent, such as molten paraffin, is poured over it. Then, the bottom part of a cassette is placed over the top of the mold filled with the embedding agent and tissue sample, and more molten embedding agent is poured onto the cassette. Consequently, the embedding agent fills the cassette and it gets combined with the mold. Afterwards the tissue embedding molds combined with the cassettes are left to solidify and the embedded tissue combined with the cassette is removed from the mold after the solidification. After the embedding is completed, the block of embedding agent (also known as a substrate block) with tissue may be placed in a machine called microtome for sectioning thin slices of the embedded tissue. The slices may get further processing to remove the embedding agent, for instance in a process called deparaffinizing, and for further treatment such as staining of samples for microscopy.

As the tissues are embedded may be biological in nature, there may be restrictions as to how residual blocks are discarded after the sectioning. Indeed, in some instances, it is required that biological tissue waste be discarded separately. However, due to the large volume of specimens that may be processed in laboratories, biological tissue waste may be inadvertently thrown away with other non-sensitive waste. In some other instances, paraffin blocks containing valuable patient samples accidentally get discarded into waste.

Thus, it was been known to add metal inserts to substrate blocks, the metal inserts being used for metal detection scanning of a waste container. The detection of metal may indicate that a substrate block with biological tissue is present in the waste container. This may result in an additional manual step of adding metal inserts, prone to human error, and requires an additional component, the metal insert. Also, labeling of paraffin blocks is challenging due to the nature of paraffin which is sometimes used as a release surface for adhesive labels.

### SUMMARY OF THE INVENTION

It is an aim of the present disclosure to provide a label that addresses issues related to the prior art.

Therefore, in accordance with a first aspect of the present disclosure, there is provided a method for handling an embedded tissue comprising: embedding a tissue in an embedding agent into a block; obtaining a label having a metal component therein; and adhering the label having the metal component therein on a surface of the block; whereby the block is detectable using metal detection.

Further in accordance with the first aspect, for instance, obtaining the label with the metal component includes obtaining the label with a metallic layer.

Still further in accordance with the first aspect, for instance, the method may include removing the label from a support liner to expose an adhesive, to then proceed with the adhering.

Still further in accordance with the first aspect, for instance, the method may include obtaining a roll including the label, detaching the label from a remainder of the roll, to then proceed with the adhering.

Still further in accordance with the first aspect, for instance, the method may include storing the block with the label thereon.

Still further in accordance with the first aspect, for instance, storing the block with the label thereon includes storing the block with the label thereon in a refrigerator or in sub-zero temperatures.

Still further in accordance with the first aspect, for instance, the method may include printing or inscribing data on the label prior to the adhering.

Still further in accordance with the first aspect, for instance, the method may include performing metal detection of a waste disposal device, and detecting the block with the label thereon.

Still further in accordance with the first aspect, for instance, he method may include embedding the tissue in the embedding agent into the block includes embedding a cassette portion in the block.

In accordance with a second aspect, there is provided a label comprising: a facestock or opaque film layer, a metallic layer under the facestock or opaque film layer, the metallic layer configured to be detected by metal detector, and an adhesive layer on an opposite side of the metallic layer from the facestock or opaque film layer, wherein the adhesive layer is configured to be adhesively secured to an embedding agent of a block in which a tissue sample is embedded.

Further in accordance with the second aspect, for instance, the label may include a support liner releasably adhered to the adhesive layer.

Still in accordance with the second aspect, for instance, the label may include a varnish and/or an ink and/or an ink-receptive coating and/or lamination on the facestock.

Still further in accordance with the second aspect, for instance, the label may include at least one electronic component in, under or on the facestock.

Still further in accordance with the second aspect, for instance, the label may include a priming layer between the metallic layer and the adhesive layer.

Still further in accordance with the second aspect, for instance, the metallic layer is a metallic foil.

Still further in accordance with the second aspect, for instance, the metallic layer includes aluminum.

Still further in accordance with the second aspect, for instance, the label may include another adhesive layer between the facestock or opaque film layer and the metallic layer.

Still further in accordance with the second aspect, for instance, the metallic layer includes steel.

Still further in accordance with the second aspect, for instance, a thickness of the metallic layer is between 0.3 mil and 3.0 mil, inclusively.

Still further in accordance with the second aspect, for instance, the metallic layer is the facestock.

In accordance with a third aspect, there is provided an assembly comprising: the label as described above, and a block in which a tissue sample is embedded, the second adhesive layer being adhesively secured to the embedding agent.

Further in accordance with the third aspect, for instance, the embedding agent is paraffin wax.

Still further in accordance with the third aspect, for instance, the assembly may include a cassette portion in embedded in the block.

In accordance with a fourth aspect, there is provided a kit comprising: a plurality of the label as described above; and a metal detector configured to detect the metallic layer.

Further in accordance with the fourth aspect, for instance, further including a block in which a tissue sample is embedded, the second adhesive layer being adhesively secured to the embedding agent.

Still further in accordance with the fourth aspect, for instance, the embedding agent is paraffin wax.

Still further in accordance with the fourth aspect, for instance, the kit may further include a cassette portion in embedded in the block..

### BRIEF DESCRIPTION OF THE FIGURES

Fig. 1 is a schematic sectional view of an embedded-tissue label in accordance with embodiments of the present disclosure;
Fig. 2 is a schematic sectional view of another embedded-tissue label in accordance with embodiments of the present disclosure;
Fig. 3 is a schematic sectional view of the embedded-tissue label on a block of embedding agent containing a tissue sample;
Fig. 4 is a perspective view of the embedded-tissue label on a block of embedding agent containing a tissue sample, relative to a cassette; and
Fig. 5 is a schematic view of a scanning process of waste container with blocks of embedding agent having the embedded-tissue label of Fig. 3.

### BRIEF DESCRIPTION OF THE EMBODIMENTS

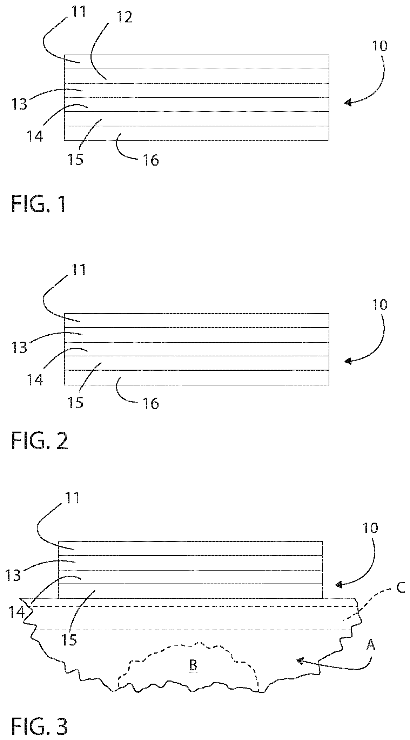

Referring to the drawings and more particularly to Fig. 1, an embedded-tissue label in accordance with a first aspect of the present disclosure is generally shown at 10. The embedded-tissue label 10 may be in the form of discrete precut labels (e.g., on a sheet, roll), may be an elongated strip or may be part of a roll. The embedded-tissue label 10 may be of the type that may be used to manually inscribe information thereon. The embedded-tissue label 10 may also be of the type used by a printer. This may include printing using a thermal printer, a thermal-transfer printer, a direct-thermal printer, a laser printer, an inkjet printer, LED printer, UV printer, impact printer, dot-matrix printer, laser-etching printer, flexographic printer, offset printer or a printing press or any other type of printer or device capable of delivering ink on any of the surfaces of the label or tape.

The embedded-tissue label 10 may have various layers, all of which may extend from end to end of the embedded-tissue label 10, as an option. Facestock 11 is the surface that can accept ink or printing, although the capability of accepting ink is not a requirement. The facestock 11 may already have data thereon, including a text, barcode, alphanumeric indicia, variable data such as serial number, serial barcode, static data, logo (e.g., repeated along the length of the embedded-tissue label 10), graphic, image, combinations thereof, etc. The facestock 11 itself may include one or more layers, including transparent and opaque layers, shielding layer(s), top coating(s), ink(s), varnishes, lamination(s), wireless communication capabilities such as RFID (Radio Frequency Identification), NFC (Near Field Communication), Bluetooth, WiFi and other types of wireless communication tags or a chip, sensor, electronic component, etc. The label or tape can be provided blank or printed with any background color or color indicator such as thermochromic ink, and/or image, and/or information and/or barcode and/or alphanumeric markings, and/or indicia etc. The facestock materials can be made of a polymer or metallic foil or metallized ink or coating. The facestock material(s) may include but are not limited to polymers such as polypropylene, biaxially oriented polypropylene (BOPP), polyester (PET), polystyrene, vinyl including polyvinyl chloride (PVC) and polyvinyl fluoride (PVF), acrylate, nylon, polyamide, satin, polyolefin, polyethylene, polyimide, tyvek, composite materials, silicone, silicone rubber, rubber, synthetic rubber, latex, thermoplastic films, thermoset plastics, plastic extrusion materials, and may also include cloth tissues, woven or non-woven fabrics, foam, graphene, magnetic film, Velcro, degradable and soluble materials including biodegradable, compostable and recyclable materials or any combination thereof. The facestock materials include paper and polymer composites or combinations, cloth and polymer composites, including nano-composite materials or combinations thereof, including layers of polymer and paper and/or cloth, such that the paper or cloth is for example laminated with plastic. Impregnated papers such as latex impregnated papers can be used as facestock. Metal containing materials such as foils, thin aluminum, aluminum foil, stainless steel foil, copper foil, and other metallic materials, metallic foils and films as well as their combination with other materials can be used as facestock.

Clear, opaque, transparent, translucent, hazy, and/or reflective, and/or glow-in-the-dark materials as well as metallic materials or any combination thereof may also be used for the facestock 11. In fact, layer 11 may be an opaque film 11. The polymers used for 11 may be thermoplastics or thermosoftening plastics, i.e., plastic polymers that soften or become moldable when heated to a certain threshold temperatures, to solidify upon cooling. The polymers may be thermoset plastics comprising cross-linked polymers to form an irreversible chemical bond and may become non-moldable when heated. The facestock 11 may be selected to have direct thermal printing capacity meaning that ink is incorporated inside the facestock 11 or in its top coating. The ink may then be released upon heating the facestock layer 11 such as by a thermal printer or a heat-emitting or heated instrument. The facestock 11 may be for example printed with a reversible or a non-reversible thermochromic ink, photochromic ink, luminescent ink, piezochromic ink or chemochromic ink which may also be incorporated inside the facestock or other constituent of the embedded-tissue label 10 such as inside the lamination or inside the polymer or inside the adhesive. The use of a combination of printing methods is contemplated. All embedded-tissue labels 10 of the present disclosure may or may not accept writing by a pen, pencil, marker or any other instrument for manual writing. The embedded-tissue labels 10 may be configured for skin contact as well, for instance in medical uses such as a transdermal patch containing a medication. The embedded-tissue labels 10 described herein may be a tape such as a plastic tape, cloth tape, nano tape, PTFE tape (polytetrafluoroethylene), among examples.

In an embodiment, dehydration of tissues may be achieved using an alcohol gradient in excess of 50%. Once the tissue is dehydrated, it may be cleared by removing the dehydrant with a compound that is also mixable with the paraffin which is used for embedding. Common clearing agents are solvents, such as xylene, toluene, limonene or others including substitutes for various solvents. There are various protocols for tissue fixing, dehydration, and embedding used in laboratories all of which are covered by the present disclosure. Accordingly, the combination of facestock 11 and ink may have the capacity to resist to such solvents, for example by way of crosslinking relation between the ink and the facestock 11.

A first adhesive layer 12 may be coated on the underside of the facestock 11. The layer of adhesive 12 may be any suitable adhesive such as a water-based, emulsion, hot-melt, UV hotmelt, rubber, latex, silicone, acrylic, UV curable, LED UV curable, electron beam (EB) curable or any other suitable adhesive. In a variant, the adhesive may be low-tack, removable or repositionable adhesive. As another embodiment, the adhesive may be a fast-drying adhesive. In another embodiment, the adhesive may be resistant to solvents such as xylene, toluene, alcohols, etc. In another embodiment, the adhesive 12 is permanent or ultra-permanent. In another embodiment, the adhesive 12 is not a pressure-sensitive adhesive. In another embodiment, the adhesive 12 is a heat-seal adhesive.

A metallic layer 13 is adhered to the first layer of adhesive 12. The metallic layer 13 may be referred to as foil, as metallic sheet, and/or may include metal particles in a substrate. In a variant, the metallic layer 13 is made of steel (e.g., stainless steel) or other metals such as aluminum, copper, lead. In another embodiment, the metallic layer 13 has a ferro-magnetic property. In another embodiment, the layer 13 is a RFID tag, or NFC tag or wireless communication tag detectable by metal detector or specialized reader or scanner, instead of being a metallic layer. The metallic layer 13 must have the property of being detectable in metal detection scanning, as detailed below. In an embodiment, the adhesive 12 may be replaced by heat seal 12 or another method of fusion of facestock 11 to metallic layer 13. Stated differently, the facestock 11 may be laminated to the metallic layer 13 in other ways, without adhesive layer 12.

A priming layer 14 may optionally be present, as fused, laminated, or otherwise secured to the metallic layer 13. The priming layer 14 may be present to interface the metallic layer 13 to a second adhesive layer 15, if the bond between the second adhesive layer 15 and the metallic layer 13 is insufficient, depending on the nature of the metallic layer 13 and/or the second adhesive layer 15.

A second adhesive layer 15 may be coated on the underside of the metallic layer 13, or on the priming layer 14 if present. The layer of adhesive 15 may be any suitable adhesive such as a water-based, emulsion, hot-melt, UV hotmelt, rubber, latex, silicone, acrylic, UV curable, LED UV curable, electron beam (EB) curable or any other suitable adhesive. In a variant, the adhesive may be low-tack, removable or repositionable adhesive. As another embodiment the adhesive may be fast-drying adhesive. In another embodiment the adhesive 15 is permanent or ultra-permanent. The second adhesive layer 15 defines the adhesive surface of the embedded-tissue label 10 on a substrate block in which a tissue sample is embedded. Accordingly, the adhesive of the second adhesive layer 15 must be selected for its capacity to adhere to the substrate. For example, the substrate may be paraffin wax. In such a case, the adhesive of the second adhesive layer 15 must be capable of adhering and remaining adhered to paraffin wax through the entire process of embedding and subsequent storage at room temperature, in low temperature (e.g. in a refrigerator) or sub-zero temperatures (e.g., in a freezer).

A support liner or release liner 16 may also be provided, from which the adhesive layer 15 of the embedded-tissue label 10 can be released. In another embodiment, the embedded-tissue label 10 may be linerless and wound on itself in a roll, such that the adhesive layer 15 adheres to the top surface of the facestock 11 from which it can be released. The facestock 11 may optionally have a release-coating thereon in such an embodiment, yet with the capacity to receive ink or to be printed (e.g., direct thermal, thermal transfer, inkjet, laser, etc). The release liner 16 may be paper based, or polymer based, with contemplated polymers including a polyester (PET), polypropylene, bi-axially oriented polypropylene (BOPP) or any other type of a polymer or thermoplastic film. For example, the release liner 16 may be or may include a silicone or fluorosilicone coated support on which the adhesive layer 15 is harboured or retained, though other materials can be used, including waxes or other adhesive release coatings, etc, on a base. For example, if the support liner 16 is paper based, a low friction coating may be present to facilitate the peeling off of a remainder of the embedded-tissue label 10 from the support liner 16. Accordingly, when the release liner 16 is removed, the facestock 11 may be adhered to a surface of a substrate block, by the adhesive layer 15. In an embodiment, the release liner 16 may have imaging properties meaning that the manual writing with a pen or a pencil or with any type of impact instrument or impact printer can create a copy of the image on the release liner 16. In this case, when the facestock 11 is removed from the liner 16, the copy of the printed information or the image remains on the release liner 16 similar to carbon-copying.

Referring to Fig. 2, another variant of the embedded-tissue label 10 is shown, in which the facestock 11 or like opaque film layer is directly on the metallic layer 13. For example, the facestock 11 or like opaque film layer is fused to the metallic layer 13 so as to serve as a facestock. The adhesive layer 15 is on the undersurface of the metallic layer 13, and the liner 16 may also be present. The priming layer 14 may optionally be present, as fused, laminated, or otherwise secured to the metallic layer 13. The priming layer 14 may be present to interface the metallic layer 13 to the adhesive layer 15, if the bond between the adhesive layer 15 and the metallic layer 13 is insufficient, depending on the nature of the metallic layer 13 and/or the adhesive layer 15. As an option, the facestock 11 (and adhesive layer 12) of Figs. 1 and 2 is absent in the label 10, meaning that the metallic layer 13 is used as facestock and printing is done on the surface of the metallic layer 13 or on a ink-receptive coating on the surface of the metallic layer 13.

Although other thicknesses are possible, some exemplary thicknesses are now given to define one contemplated embodiment. The thickness of the facestock 11 may be between 0.4 mil to 6.0 mil, or 0.4 mil and 12 mil, but may be thinner or thicker, for instance reaching a thickness as low as 0.2 mil or as thick as 40 mil. In an embodiment featuring porous or spongy materials such as foam, the thickness of the facestock may be more than 40 mils. The thickness of the metallic layer 13 may be between 0.2 mil and 12.0 mil. In an embodiment, the thickness of the metallic layer 13 is between 0.4 mil and 6.0 mil. In yet another embodiment the thickness of the metallic layer 13 is between 0.4 mil and 4.0 mil. In yet another embodiment, the thickness of the metallic layer 13 is between 0.5 mil and 3.0 mil. In yet another embodiment, the thickness of the metallic layer 13 is between 0.6 mil and 2.5 mil. In an embodiment in which the metallic layer 13 is steel or stainless steel, the thickness of it is between 0.2 mil and 3.0 mil. In a particular embodiment, in which the metallic layer 13 is steel or stainless steel, a suitable thickness for detectability may be between approximately 0.3 mil and 0.8 mil, inclusively. The thickness of the metallic layer 13 may be outside of this range, especially more than that range. However, in terms of costs and detectability, the range of 0.3 mil and 0.8 mil, inclusively, for the thickness may be favored. The thickness of the support liner 16 may be between 0.4 mil and 20 mils.

In an embodiment, a thickness of the layers of adhesive 12 and/or 15 is between 0.1 mil and 10.0 mil. It can be even less than 0.1 mil, as it may be in nanoscale if the technology permits. In another embodiment, the adhesive 12 is thermobonded or heat sealed, or a heat seal may be present between the facestock 11 and the metallic layer 13. Such thicknesses are only some possibilities, depending on the embodiments of the embedded-tissue label 10.

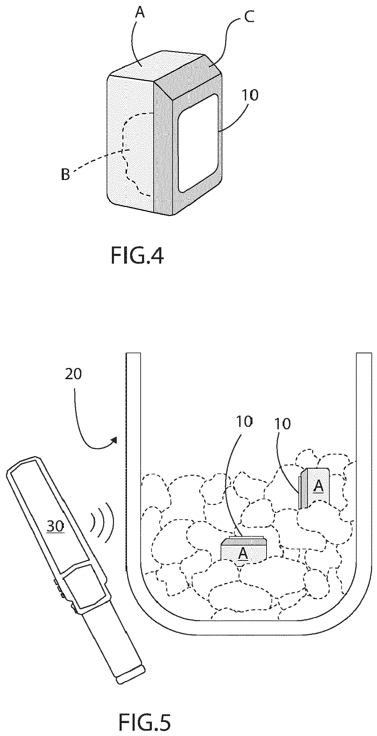

Referring to Fig. 3, without the liner 16, the embedded-tissue label 10 is adhered to a block A of embedding agent, in which a tissue sample B is embedded. As also observed from Fig. 3, a cassette C may also be embedded in the block A. The assembly of the block A with cassette C and label 10 is shown in Fig, 4, in a configuration ready to be used in microtome for sectioning of the block A, with the cassette C being clamped. The cassette C is embedded in the block A. Proportions in Fig. 3 may not be to scale as it is a schematic view. In Fig. 3, the label 10 shown is that of Fig. 1, but may be the label 10 of Fig. 2, or other labels described herein, such as ones in which the metallic layer is the facestock. The block A may be the result of a process, according to which excised tissue (including the tissue sample B) is placed in a tissue embedding cassette C for processing, starting with fixation. Fixation is used to preserve tissues and is usually carried out immediately or rapidly after the removal of the tissue to avoid tissue degradation. After the dehydrated tissue sample is fixed/processed, it needs to be infiltrated with an embedding agent, such as paraffin wax, paraplast, etc. The embedding agents are available in different hardnesses depending on the plasticizers in the formulation. Tissue samples are then placed into an embedding mold of appropriate size and a molten embedding agent, such as molten paraffin, is poured over it. Then, the bottom part of a cassette C is placed over the top of the mold filled with the embedding agent and tissue sample, and more molten embedding agent is poured onto the cassette C. Consequently, the embedding agent fills the cassette C and it gets combined with the mold, as observed in Fig. 4. Afterwards the tissue embedding molds combined with the cassettes are left to solidify and the embedded tissue B combined with the cassette C is removed from the mold after the solidification, resulting in the block A having the tissue sample B embedded therein, optionally with the cassette C. In handling it, the block A may receive the label 10 on a surface thereof, such as on the part of the block A featuring the cassette C. The label 10 is in general positioned on the opposite side from the sample B above the cassette portion C embedded along with the sample B, such that the label 10 may be against the cassette C. To summarize, the label 10 or any other label may be used in method for handling an embedded tissue that may include: embedding a tissue in an embedding agent into a block; obtaining a label having a metal component therein; and adhering the label having the metal component therein on a surface of the block; whereby the block is detectable using metal detection. The method may include any one of obtaining the label with a metallic layer; removing the label from a support liner to expose an adhesive, to then proceed with the adhering; obtaining a roll including the label, detaching the label from a remainder of the roll, to then proceed with the adhering; storing the block with the label thereon; printing or inscribing data on the label prior to the adhering; performing metal detection of a waste disposal device, and detecting the block with the label thereon; and/or embedding a cassette portion in the block.

Referring to Fig. 5, a disposal bin 20 is shown with waste therein. The disposal bin 20 is shown having a generic shape, but other waste disposal devices may be used, such as plastic bags or other types of bags, containers, receptacles, pails, etc. The disposal bin 20 is a bin not designated to receive biological waste or more specifically histological cassette containing biological material. However, disposal bin 20 is shown having some blocks A of embedding agent, in which tissue samples B are embedded. The blocks A are labelled with embedded-tissue labels 10 (of Fig. 1 or Fig. 2) adhered to the embedding agent, in a manner similar to what is shown in Fig. 3. Therefore, a metal detector 30 may be used to scan the disposal bin 20, from an exterior of the bin 20, e.g., through the wall of the bin 20 or a plastic bag. The metal detector 30 may scan the bin 20 or like waste container from other locations, including from sides, bottom, or inside the bin 20 or like waste container. Because of the presence of the metal layer 13 in the embedded-tissue labels 10, the metal detector 30 may emit a signal indicative of the presence of a metal. The metal detector 30 may be tuned to detect objects the size of the metal layer 13, so as to filter out any other metallic objects that may be correctly present in the bin 20.

The metal detector 30 may be of any appropriate type. In an embodiment, the metal detector 30 operates using a magnetic field. The metal detector 30 may therefore include an electromagnet(s) that generate electromagnetic waves, as well as a sensor(s) to detect eddy currents produced by the metal layer 13. In an embodiment, the metal detector 30 is a handheld device similar to the ones used in airports or at border entries. In another embodiment, the metal detector 30 is using ionizing radiation such as backscatter scanners and cabinet X-ray machines that use low energy X-rays to scan the waste disposal. In another embodiment, the metal detector 30 is using non-ionizing radiation such as millimeter wave machines to scan the waste disposal.

In a variant, the metal detector 30 may use radiography as a different detecting modality. The bin 20 or like waste recipient (including a bag) may be scanned using a radiographic equipment. The metal detector 30 may output visual images in which the metallic layer 13 of the layer 10 will be visually apparent. As a possibility, the metal detector 30 may include imaging processing capability, such that the radiographic images may be analysed to detect the presence of a metal in the bin 20 or like waste recipient.

## Claims

1. A method for handling an embedded tissue comprising:
embedding a tissue in an embedding agent into a block;
obtaining a label having a metal component therein; and
adhering the label having the metal component therein on a surface of the block;
whereby the block is detectable using metal detection.

2. The method according to claim 1, wherein obtaining the label with the metal component includes obtaining the label with a metallic layer.

3. The method according to claim 1 or claim 2, including removing the label from a support liner to expose an adhesive, to then proceed with the adhering.

4. The method according to any one of claims 1 to 3, including obtaining a roll including the label, detaching the label from a remainder of the roll, to then proceed with the adhering.

5. The method according to any one of claims 1 to 4, including storing the block with the label thereon.

6. The method according to claim 5, wherein storing the block with the label thereon includes storing the block with the label thereon in a refrigerator or in sub-zero temperatures.

7. The method according to any one of claims 1 to 6, including printing or inscribing data on the label prior to the adhering.

8. The method according to any one of claims 1 to 7, including performing metal detection of a waste disposal device, and detecting the block with the label thereon.

9. The method according to any one of claims 1 to 8, including embedding the tissue in the embedding agent into the block includes embedding a cassette portion in the block.

10. A label comprising:
a facestock or opaque film layer,
a metallic layer under the facestock or opaque film layer, the metallic layer configured to be detected by metal detector, and
an adhesive layer on an opposite side of the metallic layer from the facestock or opaque film layer,
wherein the adhesive layer is configured to be adhesively secured to an embedding agent of a block in which a tissue sample is embedded.

11. The label according to claim 10, further comprising a support liner releasably adhered to the adhesive layer.

12. The label according to any one of claims 10 to 11, wherein the metallic layer is a metallic foil.

13. The label according to any one of claims 10 to 12, wherein the metallic layer includes steel.

14. The label according to claim 13, wherein a thickness of the metallic layer is between 0.3 mil and 3.0 mil, inclusively.

15. The label according to claim 10, wherein the metallic layer is the facestock.
